# EUROPEAN PATENT SPECIFICATION

(11) **EP 1 404 980 B1**
(45) Date of publication and mention of the grant of the patent: **15.02.2006**
(21) Application number: 01969285.4
(22) Date of filing: 11.09.2001
(51) Int. Cl.: F16B 7/02, F16B 12/44

(54) **A CONNECTOR DEVICE FOR RELEASABLE CONNECTING OF TUBE OR ROD MEMBERS**
VERBINDUNGSVORRICHTUNG ZUM LÖSBAREN VERBINDEN VON ROHR- ODER STANGENGLIEDERN
APPAREIL DE CONNEXION EN VUE D'UNE CONNEXION AMOVIBLE D'ELEMENTS DE TUBE OU DE PISTON

(30) Priority: 07.06.2001 DK 200100884
(43) Date of publication of application: 07.04.2004
(73) Proprietor: Ideassociates (IOM) Limited, Douglas, Isle of Man IM99 1RB (GB)
(72) Inventor: FICH, Preben, Bo, Sandgate, Kent CT20 3AT (GB)
(74) Representative: Raffnsoee, Knud Rosenstand
(86) International application number: PCT/DK2001/000592
(87) International publication number: WO 2002/099292

(56) References cited:
- EP-A2- 1 050 244
- DE-A- 1 932 115
- US-A- 3 545 796
- US-A- 5 186 570
- US-A- 5 556 218

## Description

The present invention relates to a connecting device for releasable connection of tube or rod members, comprising a nodal body part having at least one projecting, at least partially wedge-shaped mandrel member and an at least partially wedge-shaped insertion member for form-fit mounting in a tubular end piece of a tube or rod member, said insertion member being adapted to said mandrel member to provide an expansion joint by axial traction of the insertion member towards the mandrel member, and traction means comprising a traction member retained against turning in the insertion member, said traction member being engaged by an elongate tightening member having a head adapted for engagement with a tightening tool means introduced through the nodal body part.

US-A-5,931,599 discloses a connecting device having an expansion wedge structure for connection of two tube members at right angles to each other. The device comprises, in connection with one tube member, a base member with a projecting expansion mandrel, with which an expansion bushing inserted in the other tube member may be brought in engagement by means of a tightening member in the form of a traction spindle. The traction spindle extends from the interior of the second tube member through a traction member connected with the expansion bushing and a longitudinal hole in the expansion mandrel for engaging a threaded hole in a retainer ring surrounding the first tube or rod member. The traction spindle is tightened from the interior of the second tube member, which entails the drawback that the sidewall of the tube has to be provided with openings to give access to the traction spindle, which entails an increase in cost, a reduction of the strength of the tube and makes assembling and disassembling difficult.

Another connecting device, known from US-A-4,921,370, for connecting two tube sections perpendicular to each other likewise comprises a base member connected with one tube section and having a projecting male cone, against which a corresponding female cone in connection with the second tube section may be tightened by means of a bolt and a nut inserted in the female cone, which thereby expands in an end part of the second tube section. The bolt passes through holes in the first tube section and the base member connected thereto for engaging the nut in the female cone. However, this entails the drawback that two tube sections cannot be connected in extension of each other, but exclusively at right angles to each other, and that in one tube section holes have to be bored, which weakens the construction and constitutes a cost-increasing additional operation. Furthermore, the head of the bolt projects from the exterior side of the first tube section, which for reasons of safety is a disadvantage, as bruises and tearing of clothing may result, if a person gets into contact with such a bolt head, and moreover, it is undesirable for aesthetical reasons that the bolt head is visible.

For connection of construction elements a nodal body part is known from US-A-5,238,343, with which a tubular connection member may be connected by tightening by means of a tightening bolt, which is screwed into a through-going threaded bore in the nodal body part, thereby expanding mutually engaging bushing members inserted in the connection member. As the bolt can only be reached through the through-going, threaded holes of the nodal body part, also this embodiment entails the drawback that tube sections cannot be connected in extension of each other, but solely at right angles to each other.

By assembly joints or connectors for square tubing disclosed in EP-A-1 050 244 and US-A-5,556,218 wedge blocks of rectangular cross-section are inserted into the tubular members to be connected and are expanded by mating wedge arms projecting from a nodal body part by tensioning of draw bolts passing through ducts in the nodal body part, each of said ducts being formed in one end with a breast for abutment of the head of the draw bolt.

Whereas the assembly joint disclosed in EP-A-1 050 244 suffers from the same limitation as the prior art connectors described in the foregoing and does not allow tubular sections of a framework to be connected in extension of each other, this drawback has been eliminated in the connector disclosed in US-A-5,556,218 by using as a tightening member for each of the wedge blocks a draw bolt entering through one side wall of the corresponding projecting arm of the nodal body part of the connector and crossing the longitudinal axis of the arm for engagement with the wedge block proximate an opposite side wall of the arm. The elimination of the described disadvantage has been obtained however, at the expense of the same inconvenience in use as described above for the connecting device of US-A-4,921,370, as the head of each draw bolt projects towards the exterior of the nodal body part in an open recess in the side wall of the projecting arm to be visible and accessible by a tightening tool.

It is an object of the present invention to provide a connecting device for releasable connection of tube or rod members in extension of each other or in an angle with respect to each other, said device not suffering from the drawbacks inherent in the prior art connecting devices described above and ensuring a sturdy and reliable connection as well as a comparatively simple disassembly of such members.

To achieve this object, the connecting device according to the invention is characterized in that retaining means is provided for retaining the tightening member against displacement in opposite axial directions with respect to the mandrel member.

Hereby is attained that the head of the tightening member cannot be displaced in any of the axial directions during tightening, for which reason the head can be contacted from the nodal body part by means of a tightening tool at an angle with respect to the axial direction of the tightening member, and simultaneously that it is always simple to locate the head on the tightening member. The connecting device may thus be assembled and disassembled from the nodal body part, even if for instance two tube sections are connected in extension of each other and without the need for the sidewalls of the tubes or the nodal body part to be provided with openings or recesses to give access for a tightening tool.

According to a preferred embodiment the mandrel member is designed as a tapering male member and the insertion member as a female member having a cavity with a substantially form-fit match to the male member, the male member having a longitudinal duct for accommodation of the tightening member.

This embodiment has advantageously been further developed as stated in dependent claims 2 to 6 and 10 to 15.

According to another preferred embodiment the mandrel member and the insertion member are designed as substantially part-cylindrical shell members having longitudinal edge surfaces, which for the creation of said at least partial wedge-shape forms an angle (v) with the direction of generatrix of the part-cylindrical member. Hereby, it becomes possible in particular to make production considerably cheaper, as the nodal body part and the mandrel member projecting from there can be made in one working process, for instance from pressure cast aluminium. Furthermore, the connecting device can be delivered as one coherent unit with the nodal body part, the mandrel member and the insertion member mutually connected.

This embodiment has advantageously been further developed as stated in the dependent claims 8 to 15.

In this connection it should in particular be noted that a particularly simple access for disassembling tube sections connected by means of the connecting device may be obtained, if also the traction member as stated in claim 10 is retained against axial displacement in the insertion member, a simple traction function being thereby obtained by operation of the tightening member.

The invention will be described in detail in the following by means of embodiments and with reference to the accompanying drawing, in which
Fig. 1 is a longitudinal sectional view through a first embodiment of a connecting device according to the invention,
Fig. 2 is a cross-sectional view of the connecting device in Fig. 1,
Fig. 3 is an end view of the connecting device in Fig. 1,
Fig. 4 a connecting device provided with a tightening component,
Figs 5a-c embodiments of connecting devices ac-cording to the invention for a varying number of tube connections in the same plane,
Fig. 6 a schematic cross-sectional view of a connecting device for connecting tubes in two planes,
Fig. 7 a perspective view of a connecting device for connecting three tube sections,
Fig. 8 a perspective view, as shown in Fig. 7, with parts of the connecting device removed,
Fig. 9 a perspective view of a half of a connecting device as shown in Figs 7 and 8,
Fig. 10 to 15 another embodiment with a nodal body part with associated mandrel member and an insertion member, seen from a longitudinal view, a cross-sectional view and from the sides facing one another, respectively.
Figs 16 and 17 are longitudinal sectional views of the embodiment in Figs 10 to 15 in two different tightening phases in respect of the mandrel member and the insertion member,
Figs 18 and 19 are views corresponding to Fig. 10 and 22 of an alternative embodiment of a mandrel member, and
Figs 20 and 21 are a longitudinal view and a cross-sectional view, respectively, of an advantageous embodiment of a nodal body part for a connecting device according to the invention.

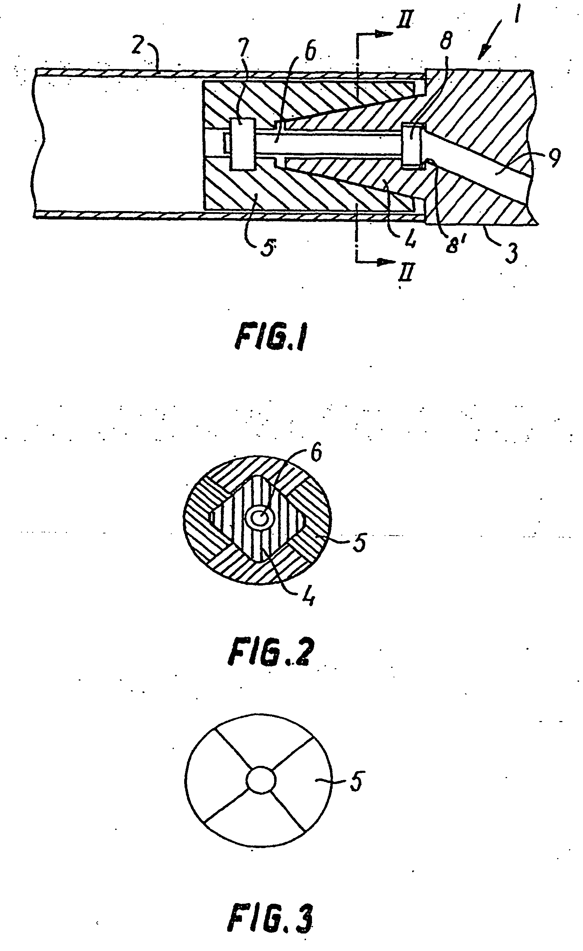

The schematic embodiment of a connecting device 1 shown in Fig. 1 is mounted in connection with a single tube section 2 and comprises a nodal body part 3 with an integral mandrel member designed as a male member 4, which in the illustrated mounted and tightened condition is surrounded by an insertion member designed as a separate, form-fitting female member 5, which, when engaged by an axially extending tightening member 6, may be tractioned by means of a traction member 7 journalled in the female member 5 against the male member 4 and tightened with respect thereto. At the end facing the nodal body part 3 the tightening member 6 is formed with a head 8 adapted to engage a tightening tool. In a manner not shown in detail the tightening member 6 is pivotally journalled, but retained in axial direction in the nodal body part 3. This may be attained e.g. by the head 8 of the tightening member 6 being accommodated in a cavity in the nodal body part 3, which may be in two parts, so that the tightening member 6 may be inserted and the nodal body part 3 assembled. Hereby is attained that the head 8 of the tightening member 6 has abutment faces in both axial directions, and the tightening member 6 is thus retained in the axial direction. By turning of the tightening member 6, the traction member 7 and consequently the female member 5 move in the axial direction, either towards the male member 4 for expansion in the tube 2, or away from the male member 4 for release of the connection.

In the nodal body part 3 at least one duct 9 is formed, through which a tightening tool may be introduced along a straight line through the nodal body part 3 for engaging the head 8 of the tightening member 6. Such a duct may either be closed, as shown, or it may be open towards a surface of the nodal body part. Hereby, easy access for turning the tightening member 6 is attained, for instance by means of an electric tool, which substantially facilitates the assembly work and reduces costs. A suitable tightening tool may for instance be a ball-key wrench, which provides a safe engagement at angles up to approximately 25°.

Between the traction member 7 and its abutment face in the female member 5, a spring member (not shown) may be inserted, for instance a disc spring; for maintaining the tightening between the tightening member 6 and the traction member 7, even though the tube member 2 or the members 4 and 5 should yield slightly. In this manner, the need for re-tightening of the connecting device 1 is minimized.

As shown in the cross-sectional view in Fig. 2, the female member 5 may be divided in four segments to allow it to expand freely by tightening and traction on the male member 4. In the embodiment shown the male member 4 has a substantially quadrangular cross-section with rounded corner faces forming abutment faces for corresponding faces of the female member 5, the segments of the female member 5 sliding in this manner over the corresponding four abutment faces on the male member 4. Advantageously, the abutment faces on the male member 4 may have the same radius of curvature over the entire extension of the male and female members, which ensures an even distension of the female member 5 against the inner side of the tube section 2 during the entire traction process. It has thus turned out in practice that, during the tightening, the female member 5 pulls the tube 2 forwards to close abutment against the nodal body part 3, following which the female member 5 slides over the male member 4 by further tightening and expands further in the tube section 2 for attainment of safe retention of the tube section 2 on the female member 5.

The division of the female member 5 into four segments is shown in a similar way in the end view in Fig. 3. The four segments may advantageously be mutually connected by a small band, such as a rubber band, or by a hinge member facilitating insertion into a tube segment by assembling the segments to take up as little space as possible.

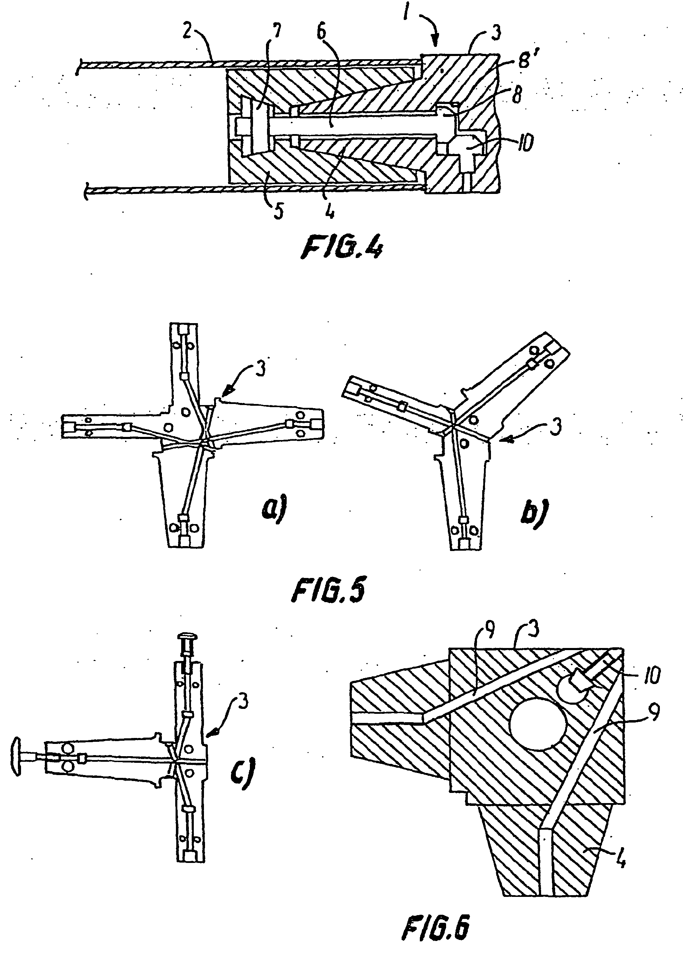

In the embodiment in Fig. 4, the connecting device 1 is provided with a tightening component 10 engaging the head 8 on the tightening member 6, which is an alternative way of ensuring simple tightening from the nodal body part 3. In this embodiment, the head 8 of the tightening member 6 is designed as a conical gear wheel engaging a likewise conical gear wheel of the tightening component 10, which has an axis of rotation perpendicular to the axis of rotation of the tightening member 6. At its other end, the tightening component 10 may be provided with a head for cooperation with a tightening tool. Hereby, access is ensured for tightening of the connecting device in cases, where such accessibility through the nodal body part 3 is difficult, which may be the case in connection with e.g. with height-adjustable tables, e.g. having telescopic legs, where a drive or transmission means for a height-adjusting mechanism may be present in the nodal body part, whereby access to the tightening member 6 through the nodal body part 3 may be difficult.

As shown in Fig. 4, the traction member 7 may be designed as a frustum of a cone or a frustum of a pyramid, which ensures good traction properties. As the rear end of the female member 5 is forced during traction towards the interior of the tube section 2, it is ensured that the tube section 2 is pulled all the way towards the nodal body part 3, the female member 5 being at the same time well expanded from its rear end.

As previously mentioned, the nodal body part 3 may advantageously consist of two halves. Halves of nodal body parts 3 with a varying number of tube connections and/or angles between the connections are shown in Figs 5a-c, where Fig. 5a shows a nodal body part 3 with four legs all forming an angle of 90° with the neighbouring leg, but where it is still possible through ducts 9 in the nodal body part 3 to gain access with a tightening tool. Fig. 5b shows a nodal body part 3 with three legs forming an angle of approximately 120° with respect to neighbouring legs, the nodal body part 3 being likewise provided with ducts ensuring access for a tightening tool.

Fig. 5c shows a nodal body part 3 corresponding to Fig. 5a, but with three legs only. As will be seen from the figures, the head of the tightening member 6 will in many cases be located somewhat out in the male member formed by one of the legs of the nodal body part, as the angle of attack for the tightening tool may be reduced thereby, the angle not being allowed, however, as previously mentioned, to exceed 25° and being preferably substantially smaller to facilitate handling. In cases where said maximum value is nearly reached, the duct may advantageously be provided with a slight curvature, such that in its last part near the head 8 the duct has a substantially axial direction facilitating introduction of the tightening tool in the head 8.

Correspondingly, the female member 5 may advantageously be manufactured from two or more parts, as the traction member 7 can be inserted in a cavity in one part and assembled with the other parts to constitute a complete female member 5.

A nodal body part for connection of tubes in two planes is illustrated in Fig. 6, which is a cross-sectional view through a nodal body part 3 having two tube connections in the plane of the figure and one tube connection at right angles thereto. Tightening of two tubes is accomplished through ducts 9 in the nodal body part, whereas tightening of the third tube may take place, as shown, by means of a tightening component 10 provided with a conical gear wheel engaging a tightening member not shown. As will be seen, a free space is obtained in the centre of the nodal body part 3, which is in many cases advantageous, for instance in connection with height-adjustable tables, as space is obtained thereby to accommodate through-going drive or transmission means in the centre of the nodal body part. An alternative could also be to use a tightening member, which is tubular per se.

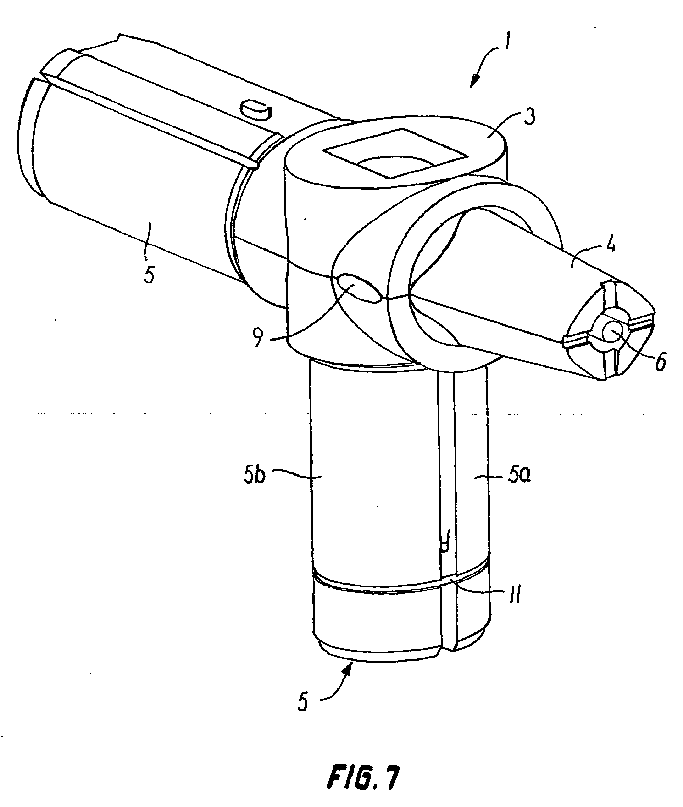

In Fig. 7 a connecting device 1 is shown for connecting three tube sections. The nodal body part 3 thus comprises three tapering male members 4, of which only one is visible, whereas on the two remaining ones female members 5 have been arranged. The female member 5 is composed of two parts 5a and 5b, which may be retained by a band, for instance a rubber band 11 laid in a groove on the surface of the female member 5. The male member 4 may as shown be made with a non-circular cross-section.

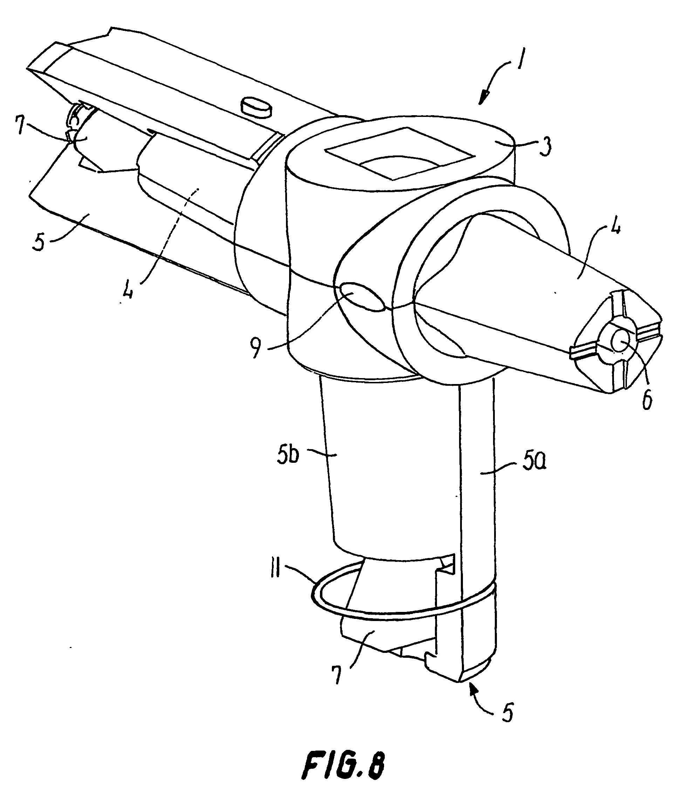

In Fig. 8 the same connecting device 1 as in Fig. 7 is shown with parts of the female member 5 removed to show the positioning of the traction member in the female member 5. Furthermore, the mouth of the duct 9, which is formed in the nodal body part 3 and through which access may be gained for introduction of a tightening tool to one end of the tightening member 6 is shown, the other end of the tightening member projecting from the male member 4. In connection with the vertically downwards projecting connection branch a tubular tightening member may advantageously be used in order to provide space for a through-going drive or transmission member.

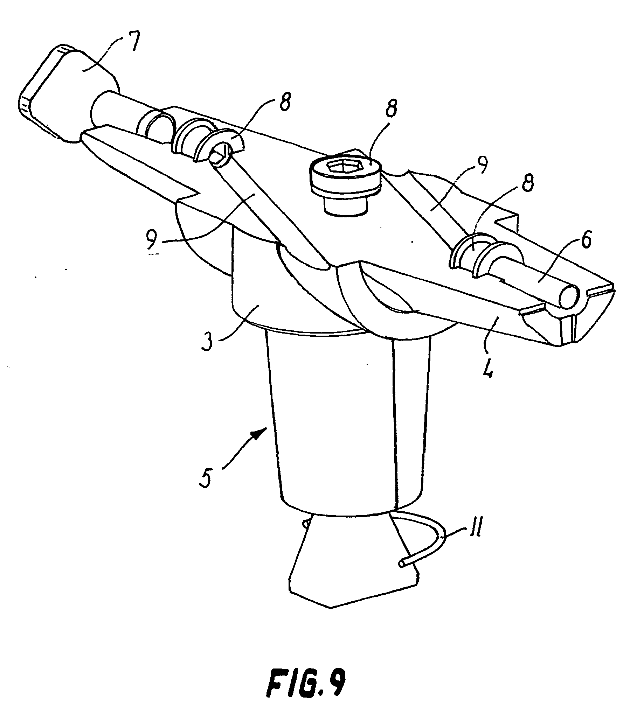

In Fig. 9 the same connecting device 1 as shown in Figs 7 and 8 is shown with upper parts of the nodal : body part 3 and two male members 4 removed, whereby also the ducts 9 in the nodal body part 3 are visible. As shown, the tightening member 6 is arranged in a cavity 6a in the male member 4, such that it is retained against axial displacement in the male member 4. The head 8 on the tightening member 6 is situated in direct extension of the duct 9, such that by introduction through the ducts 9, a tightening tool, for instance designed as described above, may be easily passed into engagement with the head 8. At its other end tightening member 6 is in engagement with the traction member 7, which is arranged in the female member 5 and has a non-circular cross-section, such that the traction member 7 is secured against turning with respect to the female member 5. As the male member 4 likewise has a non-circular cross-section, the female member 5 is secured against turning with respect to the male member 4.

In the embodiment shown in Figs 7 to 9, the female members 5 are composed of four segments, but the female members may alternatively be designed with for instance two or three or more than four segments and the male member with a corresponding number of abutment surfaces.

The embodiments shown in Figs 1 to 9 are intended for connection of round tubes, which are often preferred to obtain optimum torsional rigidity of a completed tube frame, but the connecting device according to the invention may, if desired, alternatively be designed for tube sections having for instance oval, flat-oval or polygonal cross-section, the female member having in such cases an exterior form adapted to the inner contour of such a tube section.

Furthermore, the use of the connecting devices is not limited to the connection of exclusively hollow tube sections, but may also include connection of rod members or rod sections having tubular end pieces.

Due to the fact that by use of the connecting device according to the invention through-bores in tube sections to be connected are not required, weakening of the strength of such tube sections is avoided as is any need for processing of the tube sections prior to connection, just as, in addition to a very simple assembly and disassembly, a connection is obtained, which is particularly torsionally rigid. By connection of tube sections having substantially circular cross-section, in particular, it may be advantageous, however, for securing the connecting device against turning, to provide each tube end with a recess or depression for cooperation with a pin on the nodal body part to ensure a not twisted erection of the tube frame. The tube sections may further be provided with guide holes or depressions for mounting of e.g. a tabletop to ensure a plane mounting. By means of the connecting device according to the invention tube frames for e.g. tables or the like may be built up, which may be levelled prior to mounting of other members, such as a tabletop, so that the load on the tube frame during levelling is minimized.

In practice, it has turned out to be advantageous to use substantially round tube sections, which for attainment of good securing against turning may be provided with a longitudinal, e.g. rolled groove. At a tube diameter of for instance 65 mm, such a rolled groove may be designed with a depth of e.g. approximately 3.5 mm. In this manner good securing is attained against turning of e.g. a tabletop support fastened to the tube section 2 and simultaneously an advantageous securing against turning of the female member 5 with respect to the tube section 2, the female member 5 being provided with a corresponding recess as the case may be.

A further advantage of the connecting device according to the invention resides in that the ducts made in the nodal body part for introduction of a tightening tool may be positioned outside a centre area, for instance where axial lines of the connected tube pieces intersect, so that this area is kept free, e.g. for introduction of a drive shaft or spindle, as may be the case for height-adjustable tables.

When constructing a female member from several segments, a connecting device is provided which may adapt itself to tolerances of the assembled tube sections, the segmented wedge-construction entailing an evenly distributed expansion against the interior side of the tube section over a distance therein and offering simultaneously the possibility of increased or reduced expansion, corresponding to tubes with slightly differing interior diameter, which makes it possible to use cheap, welded steel tubes. Alternatively, the female member may, instead of being divided in separate segments, be designed as an inte-gral unit having slits for the formation of legs, if full expansion over the entire length of the female member is not required.

In the further preferred embodiment shown in Pigs 10 to 17 of a connector device 101 according to the invention the projecting mandrel member 104 integrally connected with a nodal body part 103 as well as the insertion member 105 intended for mounting in a tube section 102 or a tubular end section of a rod member are designed as a part-cylindrical shell member.

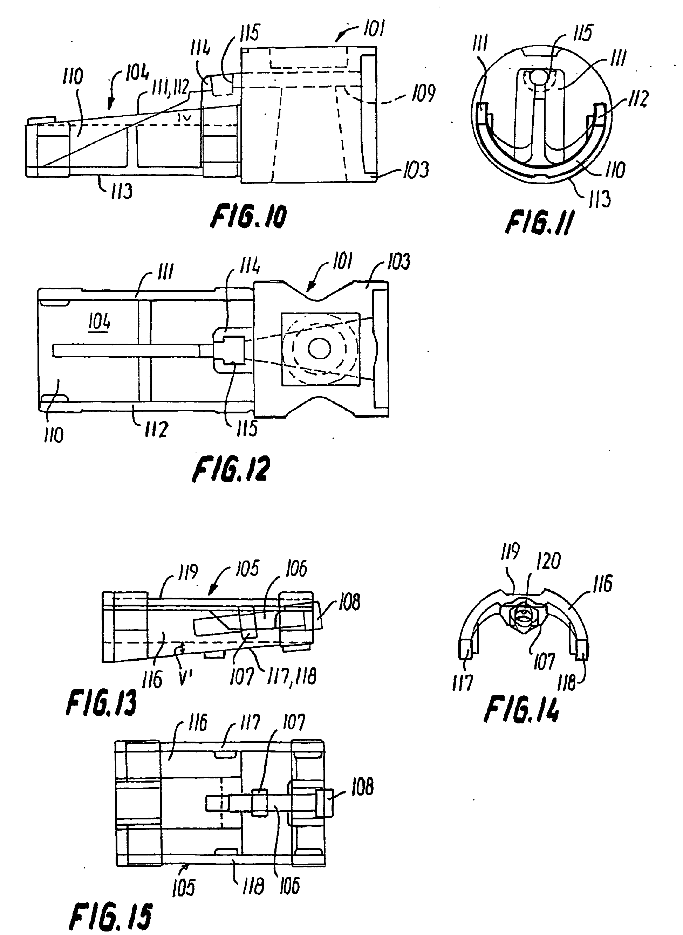

Thus, as shown in Figs 10 to 12, the mandrel member 104 is designed as a shell member with a substantially semi-cylindrical wall 110, the longitudinal edge surfaces 111 and 112 of which for the formation of a partial wedge-shape form, however, an acute wedge-angle v with the direction of generatrix of the otherwise semi-cylindrical shell member, said direction of generatrix being defined by the bottom line 113 shown in the axial sectional view in Fig. 10 and the cross-sectional view in Fig. 11.

The size of the wedge-angle v is mainly determined by shape, dimensions and tolerances of the tubular sections to be connected by means of the connecting device and the desired tightening force and consequent degree of expansion of the mandrel member 104 and the insertion member 105, from a minimum diameter allowing unhindered introduction of the connected members into a tube section to a maximum diameter of the connected members in an assembled tightened position with exterior sides of the part-cylindrical walls of the members or parts thereof being in stable pressure contact against the interior wall side of the tube section. The wedge-angle v may typically lie within the angular range from 3 to 15°, e.g. 6°.

As mentioned above, the part-cylindrical wall 110 of the mandrel member 104 may advantageously be designed integrally with the nodal body part 103 of the connecting device 101 as a unit made e.g. from pressure cast aluminium.

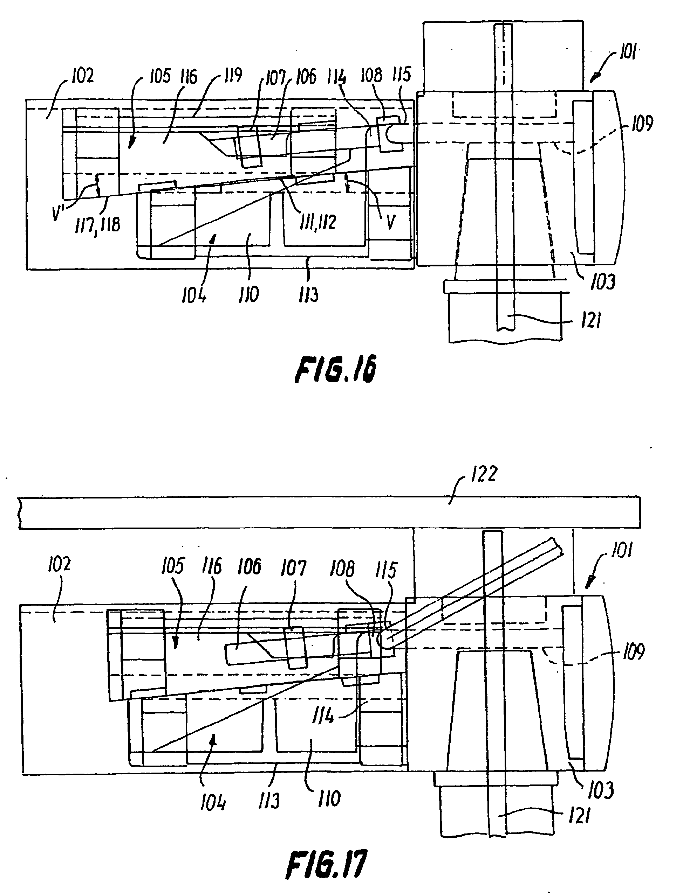

At the transition between the nodal body part 103 and the part-cylindrical wall 110 and substantially through the middle of the trough-shaped cavity defined by the wall 110, a transition piece is formed in the form of an upright, projecting block 1.14, in the upper side of which a recess 115 is provided for receiving a head of a tightening bolt not shown in Figs 10 to 12, such that the bolt according to the invention is secured against axial displacement with respect to the mandrel member 104. For connection with a vertical carrier member, e.g. a table leg or a column, the nodal body part 103 may be provided as shown with a downwards facing conical bore 122 for cooperation with a pressure pin 123 at the upper end of the carrier member, as shown in Figs 16 and 17.

Corresponding to this embodiment of the mandrel member 104 also the insertion member 105, as shown in Figs 13 to 15, is designed as a shell member with a substantially semi-cylindrical wall 116 defined by longitudinal edge surfaces 117 and 118, which with the direction of generatrix of the part-cylindrical wall 116 defined by the bottom line 119 in the axial sectional view in Fig. 13 and the cross-sectional view in Fig. 14 form a wedge-angle v', which is of substantially the same size as the wedge-angle v of the mandrel member 104, i.e. for instance in the angular range from 3 to 15°, preferably 6°.

As seen most clearly from Figs 13 and 14, the insertion member 105 in the trough-shaped cavity defined by the part-cylindrical wall 116 may be provided with a traction member in the form of a flange or rib member 107 facing downwards from the top of the interior side of the part-cylindrical wall 116, said flange or rib member 107 being provided with a threaded bore for engagement by a tightening means in the form of a tightening bolt 106.

As best seen from the axial sectional view in Fig. 13 the flange or rib member 107 forms a substantially right angle with the parallel edge surfaces 117 and 118 situated in a common plane, such that, when mounted, the tightening bolt 106 will be orientated substantially in parallel with the plane defined by the edge surfaces 117 and 118.

Contrary to the design shown in Figs 1 to 9 of the mandrel and insertion members of the connecting device as actual male and female members, the design of the two members in the embodiment of Figs 10 to 15 as part-cylindrical shell members has the effect that, when connected, the mandrel member 104 and the insertion member 105 are placed with the edge surfaces 111,112 and 117,118 in mutual contact as shown in Figs 16 and 17, so that the substantially semi-cylindrical walls 110 and 116 together define a substantially full-cylindrical expansion member, the diameter of which may very between a minimum diameter intended for unhindered introduction into a tube section 102 and a maximum diameter intended for provision of a robust frictional fitting for safe retention of the tube section.

The axial sectional views in Figs 16 and 17 show the connected mandrel and insertion members 104 and 105 in an introduction position corresponding to said minimum diameter and a nearly fully tractioned expanded position.

As mentioned, compared to the embodiments in Figs 1 - 9, the embodiment in Figs 10 to 17 offers the possibility, in particular, of making the manufacture less costly. Furthermore, the practical advantage is obtained that a segmented insertion member is avoided, such that the connecting device with the nodal body part and the mandrel member integrally connected therewith as well as the insertion member may be supplied as a single coherent unit by positioning of head 108 of the tightening bolt 106 in the recess 115 of the mandrel member.

As will be seen from Figs 16 and 17, also the embodiment shown therein makes it possible, in the same manner as shown in Fig. 5, to position ducts 109 formed in the nodal body part 103 for introduction of a tightening tool for engaging the head 106 of the tightening bolt outside a centre area of the nodal body part, which is hereby kept free for the passing-through of for instance a drive shaft or spindle 121 of a height-adjusting mechanism, not shown, for a table structure with a height-adjustable tabletop 122.

Instead of being formed as a mainly solid body, as shown and described, in which the required lead-in ducts are provided, the nodal body part may alternatively be designed as a substantially hollow shell body having an interior cavity, which may be used for instance for accommodation of operative functional components, such as a drive motor and/or a transmission for a height-adjustable table frame.

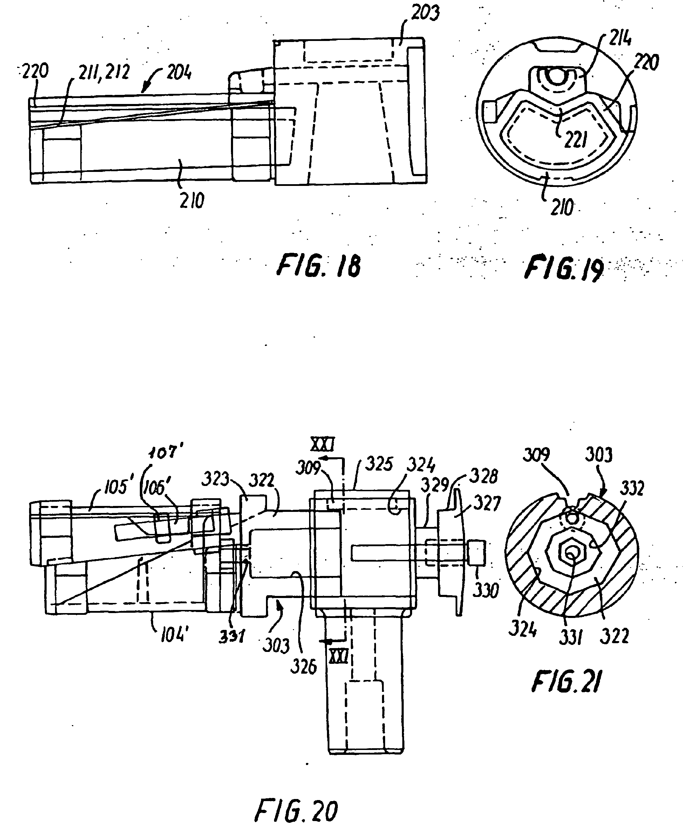

Figs 18 and 19 are an axial view and a cross-sectional view, respectively, of an alternative embodiment of a mandrel member 204 for the embodiment in Figs 10 to 17. The mandrel member is here provided with a closed cross-sectional profile limited by a part-cylindrical lower wall 210, which in this case extends over an arc-length less than 180°, for instance 120°, and an upper wall 220 having a substantially trapezoidal cross-sectional profile, in the uppermost part of which a depression 221 is provided, however, to give room for the tightening bolt not shown. The upper wall 220 is connected with the part-cylindrical lower wall 210 by shoulder-like recess faces 211 and 212, which with the direction of generatrix defined by the bottom line 213 of the lower wall form a wedge-angle v corresponding to the wedge-angle v at the mandrel member in Figs 10 to 12.

Compared to the embodiment in Figs 10 to 12, the mandrel member 205 in Figs 18 and 19 has an increased rigidity and thus an increased resistance towards deformation forces, which may occur in connection with the expansion caused by traction of an insertion member as shown in Figs 13 to 15.

In connection with the connecting device shown in Figs 20 and 21, the mandrel member 104' and the insertion member 105' are designed in substantially the same way as the mandrel and insertion members in the embodiment shown in Figs 10 to 17, whereas the nodal body part 303 is designed substantially as a polygonal, e.g. octagonal pin 322, which through a substantially circular disc-shaped transition member 323 with a diameter corresponding to the tube sections to be connected, is connected with the mandrel member 104'. The polygonal, e.g. octagonal pin 322 is de-signed to be form-fit retained and secured against turning in a corresponding polygonal, e.g. octagonal bore 324 in a mounting member 325 to be mounted at the upper end of a vertical carrier member not shown, for instance a leg or a carrier column in a height-adjustable table construction.

The octagonal pin 322 is provided with an interior blind hole 326 of polygonal, e.g. octagonal cross- section, whereby the retention of the pin 322 in the bore 324 can be ensured by means of a safety plug 327 inserted from the opposite side of the bore 324, said plug being provided with two stepwise reduced sections 328 and 329 of polygonal, e.g. octagonal cross-section for form-fit retention secured against turning in the bore 324 and in the blind hole 326, respectively. To ensure the connection of the plug 327 with the nodal body part 303 a bolt 330 may be used, which is passed through the safety plug 327 and the transition member 323 of the nodal body part 303 for screwing into a threaded bore 331 at the end of the mandrel member 104' or a nut secured thereto. The connecting device with the mandrel and insertion members 104' and 105' , the nodal body part 303 with the pin 322 and the safety plug 327 may in this manner be supplied as one coherent unit.

As most clearly seen from the cross-sectional view in Fig. 21, the mounting member 325 may be provided, at the top, with an open duct 309 for guiding of a tightening tool for engagement with the tightening bolt 106' of the connecting device, as described above.

Even though the connecting device according to the invention may also advantageously be used for connecting tube sections having non-circular cross-section, for instance an oval, flat oval or polygonal cross-section, it is particularly suitable for connecting round tube sections, which are by far superior to tubes having other geometrical cross-sectional shapes in respect of power and torque transmission.

The present invention provides a connecting device, which is most suitable for the manufacture of frame structures built up by tube sections or rod members, such as frames for tables, chair seats or the like, sturdy and reliable securing of tube sections to the nodal body part of the connecting device being ensured by the connecting device simultaneously with an optimum torsional rigidity, which is not weakened by through-boring of the tube walls. In this manner known problems are overcome in connection with the levelling of a frame on an uneven substratum, where a less torsionally rigid design may entail a wrenching of the frame structure and thus impede the levelling. If a frame is not correctly levelled, there will be a risk of tensions arising in the frame structure. In case of for instance a height-adjustable table, just a modest wrenching of the frame structure may entail a substantially increased friction in the height-adjustment function.

## Claims

1. A connecting device for releasable connection of tube or rod members, comprising a nodal body part (3,103,203,303) having at least one projecting, at least partially wedge-shaped mandrel member (4,104,104',204) and an at least partially wedge-shaped insertion member (5,105,105') for form-fit mounting in a tubular end piece (2,102) of a tube or rod member, said insertion member being adapted to said mandrel member (4,104,,104',204) to provide an expansion joint by axial traction of the insertion member (5,105,105') towards the mandrel member (4,104,104',204), and traction means comprising a traction member (7,107,107') retained against turning in the insertion member, said traction member being engaged by an elongate tightening member (6,106,106') having a head (8,108) adapted for engagement with a tightening tool means introduced through the nodal body part, **characterized in that** retaining means (8' ,115) is provided for retaining the tightening member (6,106,106') against displacement in opposite axial directions with respect to the mandrel member (4,104,104',204).

2. A connecting device according to claim 1, **characterized in that** the mandrel member is designed as a tapering male member (4) and the insertion member as a female member (5) having a cavity (8') with a substantially form-fit match to the male member (4), the male member (4) being provided with a longitudinal duct for accommodation of the tightening member (6).

3. A connecting device according to claim 2, **characterized in that** the nodal body part (3) is composed of two halves.

4. A connecting device according to claim 2 or 3, **characterized in that** the male member (4) has a non-circular cross-section with a number of abutment surfaces having the same radius of curvature in the entire extension of the male member.

5. A connecting device according to claim 4, **characterized in that** the male member (4) has a cross-section which is substantially a triangle, a quadrangle or a polygon, the corners of the triangle, quadrangle or polygon being rounded and forming said abutment surfaces.

6. A connecting device according to claim 2 or 3, **characterized in that** the female member (5) consists of several parts, such as segments.

7. A connecting device according to claim 1, **characterized in that** the mandrel member (104,204) and the insertion member (105) are designed as substantially part-cylindrical shell members having longitudinal edge surfaces (11,112,117,118; 211,212), which for the creation of said at least partial wedge-shape forms an angle (v) with the direction of generatrix of the part-cylindrical member.

8. A connecting device according to claim 7, **characterized in that** said edge surfaces (11,112,117,118;211,212) on each of the mandrel member (104,204) and the insertion member (105) are positioned in a common plane.

9. A connecting device according to claim 7 or 8, **characterized in that** the mandrel member (104,204) is formed integrally with the nodal body part (103) and joined thereto by a transition part (114) having an edge surface adapted to be introduced in said tubular end piece (102), said edge surface being provided with a recess (115) for retaining the head (108) of the tightening member against said axial displacement.

10. A connecting device (1) according to any of the preceding claims, **characterized in that** the traction member (7,107) is retained against longitudinal displacement in the insertion member.

11. A connecting device (1) according to claim 2 or 9, **characterized in that** said cavity (8') or recess (115) communicates with at least one duct (9,109) extending through the nodal body part (3,103) at an angle with respect to the axial direction of the tightening member (6,106) for introduction of said tightening tool means, said angle being less than 25°.

12. A connecting device according to claim 11, **characterized in that** said at least one duct (9,109) extends outside a central part of the nodal body part (3,103).

13. A connecting device according to any of the preceding claims, **characterized in that** the nodal body part is designed as a substantially hollow shell body.

14. A connecting device according to any of claims 1 to 10, **characterized in that** the nodal body part (3) is provided with a tightening component (10) in engagement with the tightening member (6), the tightening component (10) forming an angle of substantially 90° with respect to the axial direction of the tightening member (6).

15. A connecting device according to any of the claims 1 - 13, **characterized in that** the tightening member (6,106) is tubular.

16. A connecting device according to any of the preceding claims, **characterized in that** the traction member (7) has a shape tapering towards the male member (4), such as a frustum of a cone, a frustum of a pyramid or the like.

17. A connecting device according to any of the preceding claims, **characterized in that** the device moreover comprises a spring means inserted between the traction member (7) and its abutment surface on the female member (5).

18. A connecting device according to any of the preceding claims, **characterized in that** the nodal body part (303) comprises a pin (322) having polygonal cross-section for connection with and retention, in a manner secured against turning, in a corresponding bore (324), having polygonal cross-section, in a mounting member (325) for connection with a load-bearing construction member.

19. A connecting device according to claim 18, **characterized by** comprising a safety plug (327) having at least one stepwise reduced polygonal section (328,329) for form-fitting accommodation in said bore (324) and securing of the retainment of the nodal body part (303) therein.

20. A connecting device according to claim 19, **characterized by** comprising a bolt (330) for introduction through the safety plug (327) and screwing into a threaded hole (331) in the mandrel member (104') for tightening of the safety plug (327) with respect to the nodal body part (303) and the mandrel member (104').

## Patentansprüche

1. Verbindungsvorrichtung zur lösbaren Verbindung von Rohr- oder Stangengliedern, umfassend einen Knotenkörper (3, 103, 203, 303) mit mindestens einem hervorstehenden, zumindest teilweise keilförmigen Dornelement (4, 104, 104', 204) und einem zur formschlüssigen Montage in einem rohrförmigen Endstück (2, 102) eines Rohres oder Stangenglieds zumindest teilweise keilförmigen Einsatzelement (5, 105, 105'), welches dem genannten Dornelement (4, 104, 104', 204) angepasst ist, um bei axialer Zugkraft des Einsatzelements (5, 105, 105') gegen das Dornelement (4, 104, 104', 204) einer Ekspansionsverbindung vorzusehen, sowie Zugmitteln umfassend ein im Einsatzelement drehfest festgehaltenes Zugelement (7, 107, 107'), welches mit einem länglichen Zuspannelement (6, 106, 106') im Eingriff ist, welches einen zum Eingriff mit einem durch den Knotenkörper eingeführten Zuspannwerkzeug angepassten Kopf (8, 108) aufweist, **dadurch gekennzeichnet, dass** ein Haltemittel (8', 115) zur Festhaltung des Zuspannelements (6, 106, 106') gegen Verschiebung in entgegengesetzten Axialrichtungen bezüglich des Dornelements (4, 104, 104', 204) vorgesehen ist.

2. Verbindungsvorrichtung nach Anspruch 1, **dadurch gekennzeichnet, dass** das Dornelement als ein sich verjüngendes Steckerelement (4) und das Einsatzelement als ein Buchsenelement (5) mit einer zum Steckerelement (4) im Wesentlichen formschlüssigen Höhlung ausgebildet ist, wobei das Steckerelement (4) mit einem Längskanal zur Aufnahme des Zuspannelements (6) versehen ist.

3. Verbindungsvorrichtung nach Anspruch 2, **dadurch gekennzeichnet, dass** der Knotenkörper (3) aus zwei Hälften zusammengesetzt ist.

4. Verbindungsvorrichtung nach den Ansprüchen 2 oder 3, **dadurch gekennzeichnet, dass** das Steckerelement (4) einen nichtkreisförmigen Querschnitt mit einer Anzahl von Anlageflächen mit demselben Krümmungsradius über die gesamte Ausdehnung des Steckerelements aufweisen.

5. Verbindungsvorrichtung nach Anspruch 4, **dadurch gekennzeichnet, dass** das Steckerelement (4) einen im Wesentlichen dreieckigen, quadratischen oder polygonalen. Querschnitt aufweist, wobei die Ecken des Dreiecks, Vierecks oder Polygons gerundet sind und die genannten Anlageflächen bilden.

6. Verbindungsvorrichtung nach Anspruch 2 oder 3, **dadurch gekennzeichnet, dass** das Buchsenelement (5) aus mehreren Teilen, wie beispielsweise Segmenten, besteht.

7. Verbindungsvorrichtung nach Anspruch 1, **dadurch gekennzeichnet, dass** das Dornelement (104, 204) und das Einsatzelement (105) als im Wesentlichen teilzylindrische Schalenelemente mit längslaufenden Randflächen (11, 112, 117, 118; 211, 212) ausgebildet sind, die zur Bildung der zumindest teilweisen Keilform einen Winkel (v) mit der Richtung der Erzeugenden des teilzylindrischen Elements bilden.

8. Verbindungsvorrichtung nach Anspruch 7, **dadurch gekennzeichnet, dass** die genannten Randflächen (11, 112, 117, 118; 211, 212) an jeweils dem Dornelement (104, 204) und dem Einsatzelement (105) in einer gemeinsamen Ebene positioniert sind.

9. Verbindungsvorrichtung nach den Ansprüchen 7 oder 8, **dadurch gekennzeichnet, dass** das Dornelement (104, 204) einstückig mit dem Knotenkörper (103) gebildet und an diesen durch ein Übergangsstück (114) mit einer zur Einführung in das genannte Rohrförmige Endstück (102) angepassten Randfläche angeschlossen ist, die mit einer Ausparung (115) zur Festhaltung des Kopfes (108) des Zuspannelements gegen die genannte Axialverschiebung versehen ist.

10. Verbindungsvorrichtung (1) nach einem der vorhergehenden Ansprüche, **dadurch gekennzeichnet, dass** das Zugelement (7, 107) gegen Längsverschiebung im Einsatzelement festgehalten ist.

11. Verbindungsvorrichtung (1) nach einem der Ansprüche 2 oder 9, **dadurch gekennzeichnet, dass** die genannte Höhlung (8') oder Ausparung (115) mit mindestens einem um einen Winkel bezüglich der Axialrichtung des Zuspannelements (6, 106) sich durch den Knotenkörper (3, 103) erstreckenden Kanal (9, 109) zur Einführung des genannten Zuspannwerkzeuges in Verbindung steht, wobei der genannte Winkel unter 25° beträgt.

12. Verbindungsvorrichtung nach Anspruch 11, **dadurch gekennzeichnet, dass** der mindestens eine Kanal (9, 109) sich außerhalb eines zentralen Teils des Knotenkörpers (3, 103) erstreckt.

13. Verbindungsvorrichtung nach einem der vorhergehenden Ansprüche, **dadurch gekennzeichnet, dass** der Knotenkörper als ein im wesentlichen hohler Schalenkörper ausgebildet ist.

14. Verbindungsvorrichtung nach einem der Ansprüche 1 bis 10, **dadurch gekennzeichnet, dass** der Knotenkörper (3) mit einem sich im Eingriff mit dem Zuspannelement (6) befindlichen Zuspannteil (10) versehen ist, welches einen Winkel von im Wesentlichen 90° zur Axialrichtung des Zuspannelementes (6) bildet.

15. Verbindungsvorrichtung nach einem der Ansprüche 1 bis 13, **dadurch gekennzeichnet, dass** das Zuspannelement (6, 106) rohrförmig ausgebildet ist.

16. Verbindungsvorrichtung nach einem der vorhergehenden Ansprüche, **dadurch gekennzeichnet, dass** das Zugelement (7) eine sich zum Steckerelement (4) verjüngende Form, wie beispielsweise die Form eines Kegelstumpfes, eines Pyramidenstumpfes oder dergleichen, aufweist.

17. Verbindungsvorrichtung nach einem der vorhergehenden Ansprüche, **dadurch gekennzeichnet, dass** die Vorrichtung ferner ein zwischen dem Zugelement (7) und dessen Anlagefläche am Buchsenelement (5) eingesetztes Federmittel umfasst.

18. Verbindungsvorrichtung nach einem der vorhergehenden Ansprüche, **dadurch gekennzeichnet, dass** der Knotenkörper (303) einen Zapfen (322) mit einem polygonalen Querschnitt zur Verbindung mit und drehfasten Festhaltung in einer entsprechenden, im Querschnitt polygonalen Bohrung (324) in einem Montageelement (325) zur Verbindung mit einem tragenden Konstruktionselement umfasst.

19. Verbindungsvorrichtung nach Anspruch 18, **dadurch gekennzeichnet, dass** sie einen Sicherungsstopfen (327) mit mindestens einem abgestuften polygonalen Abschnitt (328, 329) zur formschlüssigen Aufnahme in der genannten Bohrung (324) und zur Sicherung der Festhaltung des sich darin befindlichen Knotenkörpers (303) umfasst.

20. Verbindungsvorrichtung nach Anspruch 19, **dadurch gekennzeichnet, dass** sie zum Festspannen des Sicherungsstopfens (327) mit dem Knotenkörper (303) und dem Steckerelement (104') einen Bolzen (330) zur Einführung durch den Sicherungsstopfen (327) hindurch und zum Einschrauben in eine Gewindebohrung (331) umfasst.

## Revendications

1. Dispositif de connexion pour accouplement amovible d'éléments de tube ou de tige, comprenant une portion de corps nodal (3, 103, 203, 303) présentant au moins une partie de mandrin au moins partiellement conique (4, 104, 104', 204) faisant saillie et une portion d'insertion au moins partiellement conique (5,105,105') pour montage adapté à la forme dans une extrémité tubulaire (2, 102) d'un élément de tube ou de tige, portion d'insertion étant adaptée à la dite partie de mandrin (4, 104, 104', 204) pour obtenir un joint à expansion par traction axiale de la portion d'insertion (5, 105, 105') vers la partie de mandrin (4, 104, 104', 204), et des moyens de traction comprenant un élément à traction (7, 107, 107') retenu contre rotation dans la portion d'insertion, élément à traction qui est engagé par un élément de serrage (6, 106, 106') allongé et présentant une tête (8, 108) adaptée à l'engagement avec un dispositif de serrage introduit à travers la portion de corps nodal, **caractérisé en ce qu**'un moyen de maintien (8', 115) est prévu pour retenir l'élément de serrage (6, 106, 106') contre déplacement dans des directions axiales opposées par rapport à la partie de mandrin (4, 104, 104', 204).

2. Dispositif de connexion selon la revendication 1, **caractérisé en ce que** la partie de mandrin est conçue comme un élément mâle pointu (4) et la portion d'insertion comme un élément femelle (5) ayant une cavité (8') étant essentiellement adaptée dans la forme de l'élément mâle (4), l'élément mâle (4) étant pourvu d'un conduit longitudinal pour recevoir l'élément de serrage (6).

3. Dispositif de connexion selon la revendication 2, **caractérisé en ce que** la portion de corps nodal (3) est composée de deux moitiés.

4. Dispositif de connexion selon la revendication 2 ou 3, **caractérisé en ce que** l'élément mâle (4) présente une section transversale non-circulaire avec un nombre de surfaces d'appui ayant le même rayon de courbure dans l'entière étendue de l'élément mâle.

5. Dispositif de connexion selon la revendication 4, **caractérisé en ce que** l'élément mâle (4) présente une section transversale qui est essentiellement un triangle, un quadrilatère ou un polygone, les angles du triangle, du quadrilatère ou du polygone étant arrondis et formant les dites surfaces d'appui.

6. Dispositif de connexion selon la revendication 2 ou 3, **caractérisé en ce que** l'élément femelle (5) est constitué de plusieurs portions, telles que des segments.

7. Dispositif de connexion selon la revendication 1, **caractérisé en ce que** la partie de mandrin (104, 204) et la portion d'insertion (105) sont conçues comme des portions de coque essentiellement semi-cylindriques ayant des surfaces de bord longitudinales (11, 112, 117, 118; 211, 212) qui, pour créer les dites formes au moins partiellement coniques, établit un angle (v) avec la direction de génératrice de la portion semi-cylindrique.

8. Dispositif de connexion selon la revendication 7, **caractérisé en ce que** les dites surfaces de bord (11, 112, 117, 118; 211, 212) sur chaque partie de mandrin (104, 204) et chaque portion d'insertion (105) sont situées dans un plan commun.

9. Dispositif de connexion selon la revendication 7 ou 8, **caractérisé en ce que** la partie de mandrin (104, 204) est formée d'une seule pièce avec la portion de corps nodal (103) et associée à celle-ci par une pièce de raccordement (114) ayant une surface de bord adaptée à introduire dans la dite extrémité tubulaire (102), la dite surface de bord étant pourvue d'un évidement (115) pour retenir la tête (108) de l'élément de serrage contre le dit déplacement axial.

10. Dispositif de connexion (1) selon l'une quelconque des revendications précédentes, **caractérisé en ce que** l'élément à traction (7, 107) est retenu contre déplacement longitudinal dans la portion d'insertion.

11. Dispositif de connexion (1) selon la revendication 2 ou 9, **caractérisé en ce que** la dite cavité (8') ou l'évidement (115) communique avec au moins un conduit (9, 109) s'étendant à travers la portion de corps nodal (3, 103) à un angle par rapport à la direction axiale de l'élément de serrage (6, 106) pour introduire le dit dispositif de serrage, le dit angle étant inférieur à 25°.

12. Dispositif de connexion selon la revendication 11, **caractérisé en ce que** le dit au moins un conduit (9, 109) s'étend en dehors d'une zone centrale de la portion de corps nodal (3, 103).

13. Dispositif de connexion selon l'une quelconque des revendications précédentes, **caractérisé en ce que** la portion de corps nodal est conçue comme un corps de coque essentiellement creux.

14. Dispositif de connexion selon l'une quelconque des revendications 1-10, **caractérisé en ce que** la portion de corps nodal (3) est pourvue d'un composant de serrage (10) en engagement avec l'élément de serrage (6), le composant de serrage (10) formant un angle d'essentiellement 90° par rapport à la direction axiale de l'élément de serrage (6).

15. Dispositif de connexion selon l'une quelconque des revendications 1-13, **caractérisé en ce que** l'élément de serrage (6, 106) est tubulaire.

16. Dispositif de connexion selon l'une quelconque des revendications précédentes, **caractérisé en ce que** l'élément à traction (7) présente une forme pointue vers l'élément mâle (4), telle qu'un tronc de cône, un tronc de pyramide ou un objet semblable.

17. Dispositif de connexion selon l'une quelconque des revendications précédentes, **caractérisé en ce que** le dispositif comprend également un moyen de ressort inséré entre l'élément à traction (7) et sa surface d'appui sur l'élément femelle (5).

18. Dispositif de connexion selon l'une quelconque des revendications précédentes, **caractérisé en ce que** la portion de corps nodal (303) comprend un tenon (322) ayant une section transversale polygonale pour liaison avec et maintien d'une manière fixée contre rotation dans un alésage correspondant (324), ayant une section transversale polygonale, dans un élément de montage (325) pour liaison avec une partie de construction portante.

19. Dispositif de connexion selon la revendication 18, **caractérisé en** comprenant un bouchon de sûreté (327) ayant au moins une section polygonale réduite à gradins (328, 329) pour logement adapté à la forme dans le dit alésage (324) et assurant le maintien de la portion de corps nodal (303) dans celui-ci.

20. Dispositif de connexion selon la revendication 19, **caractérisé en** comprenant un boulon (330) à introduire à travers le bouchon de sûreté (327) et à visser dans un trou taraudé (331) dans la partie de mandrin (104') pour serrage du bouchon de sûreté (327) par rapport à la portion de corps nodal (303) et la partie de mandrin (104').
